# EUROPEAN PATENT SPECIFICATION

(11) **EP 1 043 861 B1**
(45) Date of publication and mention of the grant of the patent: **05.06.2002**
(21) Application number: 00301577.3
(22) Date of filing: 28.02.2000
(51) Int. Cl.: H04L 5/02

(54) **Frequency hopping multicarrier transmission in segmented cells**
Frequenzsprung-Mehrträgerübertragung in segmentierten Zellen
Transmission multiporteuse à évasion de fréquence dans des cellules sémentées

(30) Priority: 11.03.1999 US 266371
(43) Date of publication of application: 11.10.2000
(73) Proprietor: LUCENT TECHNOLOGIES INC., Murray Hill, New Jersey 07974-0636 (US)
(72) Inventor: Laroia, Rajiv, Princeton Junction, New Jersey 08550 (US); Li, Junyi, Lakewood, New Jersey 08701 (US); Vanderveen, Michaela Catalina, Lincroft, New Jersey 07738 (US)
(74) Representative: Buckley, Christopher Simon Thirsk

(56) References cited:
- EP-A- 0 833 456
- WO-A-98/59450
- US-A- 5 410 538
- AUE, FETTWEIS: "Multi-carrier spread spectrum modulation with reduced dynamic range" IEEE VEHICULAR TECHNOLOGY CONFERENCE, 28 April 1996 (1996-04-28) - 4 May 1996 (1996-05-04), pages 914-917, XP000593107 New York, US ISBN: 0-7803-3158-3
- IIDA, MARUBAYASHI: "Multi-tone combinatory frequency hopping system" IEEE INTERNATIONAL SYMPOSIUM ON SPREAD SPECTRUM TECHNIQUES AND APPLICATIONS , 22 - 25 September 1996, pages 893-897 , XP002144377 New York, US ISBN: 0-7803-3567-8

## Description

This invention relates to methods and apparatus for operating a cellular orthogonal frequency division multiplexing (OFDM) based spread spectrum multiple access wireless system, to software in computer readable form for use in a tone assignment unit of a cell of such a system, to apparatus for assigning tones in such a system, and to methods for use in operating a terminal of such a system.

It is desired that wireless communication systems be as efficient as possible to maximize a) the number of users that can be served and b) the data rates, if data service is provided. Wireless systems are shared media systems, i.e., there is a fixed available bandwidth that must be shared among all the users of the system. These systems are often implemented as so-called "cellular" systems, where the covered territory is divided into separate cells, and each cell is served by a base station.

It is well known in the art that the two particularly desirable features of a cellular wireless system are 1) that the intracell interference, i.e., interference experienced by one user that is caused by other users that are within the same cell as that user, be as small as possible, and 2) that the intercell interference, i.e., interference experienced by one user that is caused by other users that are in cells other than the one in which the user is located, is averaged across all users in neighboring cells. Most prior art digital cellular systems are time division multiple access (TDMA) systems, such as group special mobile (GSM)-, intermediate standard (IS)-136-, or IS-54-based systems, or they are code division multiple access (CDMA) systems, e.g., IS-95 based systems.

In prior art narrow band TDMA systems neighboring base stations use different, e.g., non-overlapping, parts of the available spectrum. However, bases stations that are sufficiently far away from each other to avoid substantial interference between them, i.e., non-neighboring base stations, may use the same parts of the available spectrum. Notwithstanding such spectrum reuse, the spectrum available for use in each cell is a small part of the total available spectrum. Each user in a cell has its own unique frequency band and time slot combination, and hence TDMA systems have no intracell interference, i.e., they have the first desirable feature of cellular wireless systems. However, TDMA systems do not have the second desirable feature, in that a given user only interferes with a small number of users outside the cell, so that spectral reuse is based on worst case interference rather than average interference. As a result, the system has a low "spectral" efficiency.

In prior art direct sequence (DS)-CDMA systems the entire bandwidth is used by each base station but each base station uses a different spreading code. Such CDMA systems promise higher spectral efficiency than narrow band TDMA systems. Thus, CDMA systems have the second desirable feature of a cellular wireless system. However, CDMA systems do not have the first desirable feature of a cellular wireless system because although the signals transmitted from the base station within a cell are orthogonal, because of channel dispersion, the signals received at a receiver are not necessarily orthogonal. This results in interference between users within the same cell.

Proposed prior art frequency hopping (FH)-CDMA systems are very similar to narrow band TDMA systems, except that they employ frequency hopping to also obtain the second desirable feature of a cellular wireless system. In particular, each transmitter transmits a narrow band signal, and periodically changes the carrier frequency to achieve the frequency hopping. However, disadvantageously, such hopping is relatively slow, reducing the amount of averaging that can be achieved for a given delay in the transmission path that the system can tolerate.

United States Patent No. 5,410,538 issued to Roche et al. on April 25, 1995 discloses a multi-tone CDMA system. Such a system is essentially an OFDM system that eliminates intracell interference by insuring that the received signals within a cell are orthogonal. Thus, the Roche et al. system has both desirable features of a cellular wireless system. However, the Roche et al. system partitions the spectrum into a large number of tones, which makes the system very susceptible to Doppler shifts in mobile systems. Also, because each mobile user transmits on a large number of tones, the peak-to-average ratio of the mobile transmitter is very high, resulting in poor power efficiency at the mobile station, which is disadvantageous in that power is often a limited resource-in the mobile station.

United States Patent No. 5,548,582 issued to Brajal et al. on August 20, 1996 discloses a general wide-band orthogonal frequency division multiplexing (OFDM) based spread spectrum multiple access.

We have recognized in European Patent Application EP1 039 683 published on 27/09/2000 that the Brajal et al. system is not optimized for use in a cellular system in that there is no teaching therein how to optimize a) the hopping pattern, b) the tone assignment, or c) the bandwidth reuse. We have further recognized that optimizing these factors, individually and/or collectively, is important to obtain a spectrally efficient system, i.e., a system that has the two particularly desirable features of a cellular wireless system. In particular, we disclosed in European Patent Application EP1 039 683 published on 27/09/2000 dividing the entire bandwidth into orthogonal tones, and reusing all of the orthogonal tones in each cell. To reduce peak-to-average ratio at the mobile transmitter, low bit rate user, such as a voice user, is allocated preferably a single one, but no more than a very small number, of the orthogonal tones for use in communicating with the base station. Data users are similarly allocated tones for data communication. However, the number of tones assigned for each data particular user is a function of the data rate for that user. The tone assignment for a given user is not always the same within the available band, but instead the tones assigned to each user are hopped over time.

A tone hopping pattern was disclosed that achieves maximum frequency diversity and averages the intercell interference, e.g., using a pattern that is a function of a mutually orthogonal latin square. More specifically, in the downlink, i.e., in the channel from the base station to the mobile station, the tones assigned to each user are change relatively rapidly, e.g., from symbol to symbol, i.e., the user fast "hops" from one tone to another. However, in the uplink, i.e., in the channel from the mobile station to the base station, although fast hopping is possible, preferably slow hopping is employed to allow efficient modulation of the uplink signal. However, when slow hopping is used in the uplink, it is necessary to employ additional techniques, such as interleaving, to compensate for the reduction in the intercell interference averaging effect.

According to a first aspect of this invention there is provided a method as claimed in claim 1.

According to a second aspect of this invention there is provided a method as claimed in claim 8.

According to a third aspect of this invention there is provided software as claimed in claim 11.

According to a fourth aspect of this invention there is provided software as claimed in claim 12.

According to a fifth aspect of this invention there is provided apparatus as claimed in claim 14.

According to a sixth aspect of this invention there is provided apparatus as claimed in claim 17.

According to a seventh aspect of this invention there is provided a method as claimed in claim 19.

According to an eighth aspect of this invention there is provided apparatus as claimed in claim 20.

According to a ninth aspect of this invention there is provided a method as claimed in claim 24.

According to a tenth aspect of this invention there is provided a method as claimed in claim 25.

We have recognized that notwithstanding the foregoing advancements, additional improvements are yet necessary to achieve a spectrally efficient system, i.e., a system that has the two particularly desirable features of a cellular wireless system. One such improvement is the use by a base station within a cell of a directional antenna in order to be able to employ sectorization as a way to reduce the intercell interference. Not only is the cell sectorized from a transmission point of view by the directionality of the downlink antenna, but the OFDM tone set employed in each cell is correspondingly sectorized, i.e., each sector in the cell is allocated a set of tones within a sub-band of the available frequency bandwidth for use when transmitting into that sector. For example, with hexagonally shaped cells, all the sectors with the same directional orientation are allocated tones within the same sub-band.

The sub-bands assigned to each sector may be periodically changed, or "hopped", among the available sub-bands within the totally available bandwidth. Such sub-band hopping is a so-called "slow" hopping, in that it is not performed on a symbol-by-symbol basis but instead occurs only after more than one symbol has been transmitted in a sector on tones within the sub-band. Furthermore, the slow hopping of the sub-bands can be no faster than slow hopping which may be employed in the uplink, i.e., the link from the mobile terminal to the base station, such as is described in European Patent Application EP1 039 683. In the downlink, each sector employs its own pilot signal, which is assigned one or more tones within the sub-band currently employed by that sector.

Similarly, for the uplink, the base station may employ a directional receiver antenna. Preferably, the mobile terminal only transmits on a tone that is within a sub-band that is allocated to the sector in which the mobile terminal is located. This, sub-band, however, need not correspond to the same location within the bandwidth as the sub-band used by the downlink to communicate with the mobile terminal.

### Brief Description of the Drawing

In the drawing:
FIG. 1 shows an example of available orthogonal tones at one cell with a spacing of Δ, within a bandwidth W;
FIG. 2 shows a time domain view of the symbol period which is available for symbol transmission, and the additional time required for transmission of the cyclic prefix;
FIG. 3 shows a block diagram of an exemplary OFDM transmitter;
FIG. 4 shows a block diagram of an exemplary OFDM receiver;
FIG. 5 shows further details of an exemplary implementation of data-to-tone applier of FIG. 3 for a base station;
FIG. 6 shows several contiguous hexagonally shaped cells;
FIG. 7 shows one allocation of sub-band assignment for sets of the hexagonally shaped sectors of FIG. 6;
FIG. 8 shows another allocation of sub-band assignment for sets of the hexagonally shaped sectors of FIG. 6; and
FIG. 9 shows an exemplary hopping pattern from one user.

### Detailed Description

The following merely illustrates the principles of the invention. It will thus be appreciated that those skilled in the art will be able to devise various arrangements which, although not explicitly described or shown herein, embody the principles of the invention and are included within its scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable medium and so executed by a computer or processor, whether or not such computer or processor is explicitly shown.

The functions of the various elements shown in the FIGs., including functional blocks labeled as "processors" may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read-only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementor as more specifically understood from the context.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent as those shown herein.

Before describing the invention it is necessary to understand generally the environment in which the invention operates, namely, orthogonal frequency division multiplexing (OFDM) systems.

Orthogonal frequency division multiplexing (OFDM) systems employ orthogonal tones within a frequency bandwidth to transmit data from different users at the same time. In particular, for any particular symbol period T which is available for symbol transmission, and a given bandwidth W, the number of available orthogonal tones N, is given by WT. In an embediment of the invention, the same bandwidth W is reused in each cell. The spacing between the orthogonal tones is Δ, which is given by 1/T. In addition to the symbol period T which is available for symbol transmission, an additional time Tc is required for transmission of a cyclic prefix, which is prepended to each symbol period and is used to compensate for the dispersion introduced by the channel response and the pulse shaping filter used at the transmitter. Thus, although a total period of T+Tc is employed, only T is available for user data transmission.

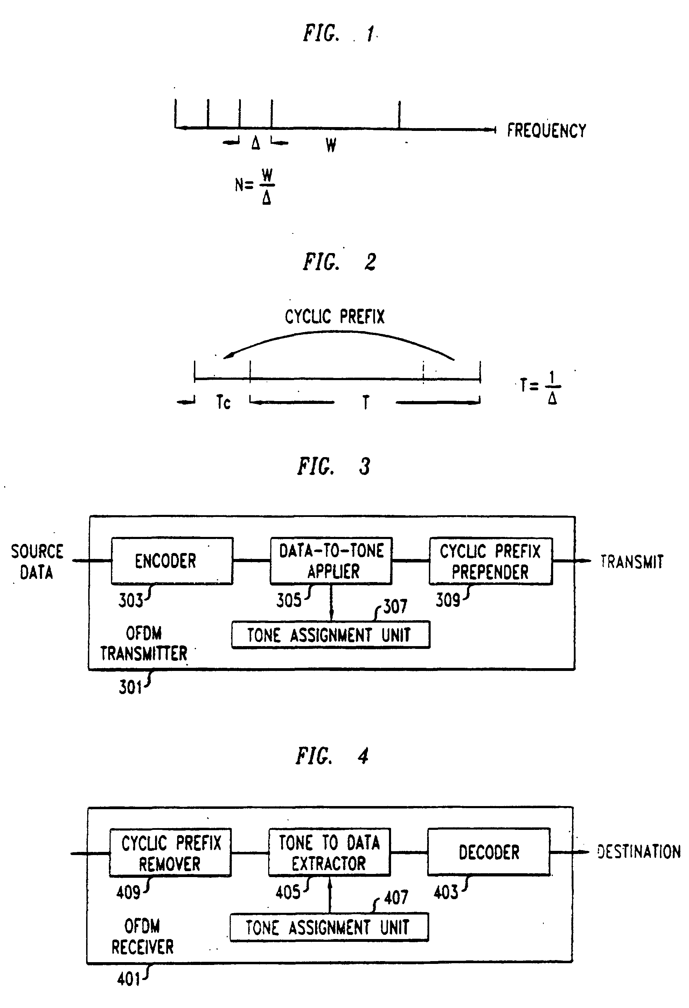

FIG. 1 shows an example of available orthogonal tones at one cell with a spacing of Δ within a bandwidth W. FIG. 2 shows a time domain view of the symbol period T which is available for symbol transmission, and the additional time Tc required for transmission of the cyclic prefix. Note that within each symbol period T data may be sent on each of the tones substantially simultaneously. Also, the last portion of the data symbol period T is often employed as the cyclic prefix in manner shown in FIG. 2.

FIG. 3 shows a block diagram of exemplary OFDM transmitter 301. Because of its high level, whether or not the diagram of FIG. 3 depicts a prior art OFDM transmitter or an OFDM embodying the principles of the invention depends on the particular implementation of the various components of FIG. 3. Also, OFDM transmitter 301 may be used in either a base station as the downlink transmitter or in a mobile station as an uplink transmitter. The particular embodiments necessary for either application will be described more fully hereinbelow.

OFDM transmitter 301 includes a) encoder 303, b) data-to-tone applier 305, c) tone assignment unit 307, and d) cyclic prefix prepender 309.

Encoder 303 receives an overall information stream for transmission from a source and encodes it according to a particular encoding scheme. Such overall information stream typically includes information streams generated on behalf of more than one user if OFDM transmitter 301 is being used in a base station and only includes information streams for one user if OFDM transmitter 301 is being used in a mobile station. The encoding scheme employed may vary whether the information being transmitted in a particular information stream is voice or data. Those of ordinary skill in the art will be able to 1) select, e.g., traditional convolutional or block coding, or 2) devise, appropriate encoding schemes as a function of the model of the interference environment in which the OFDM system is being deployed.

Data-to-tone applier 305 modulates the overall encoded information stream supplied as an output from encoder 303 onto the various available tones. For each particular encoded information stream within the overall encoded information stream at least one tone is assigned by tone assignment unit 307, and that tone is used to modulate the particular encoded information stream received from encoder 303. If a particular encoded information stream is voice then preferably a single one, but no more than a very small number, of the orthogonal tones are assigned for particular encoded information stream. If a particular encoded information stream is data then the number of orthogonal tones assigned that particular encoded information stream is a function of the data rate for the user of that particular encoded information stream.

Tones are assigned to each encoded information stream by tone assignment unit 307, which conveys the assignments to data-to-tone applier 305. The tone assignment for a given user is not always the same within the available band, but instead the tones assigned to each user are hopped over time by tone assignment unit 307.

Cyclic prefix prepender 309 adds the cyclic prefix to each symbol period as described above. The cyclic prefix is added only for the tones being used by OFDM transmitter 301. Thus, for example, if OFDM transmitter 301 is in a base station using all of the tones, then the cyclic prefix uses all of the available orthogonal tones within bandwidth W. If OFDM transmitter 301 is in a mobile station using only a single one of the tones, then the cyclic prefix uses only that particular single tone. Advantageously, use of the cyclic prefix eliminates the need for equalization at the receiver.

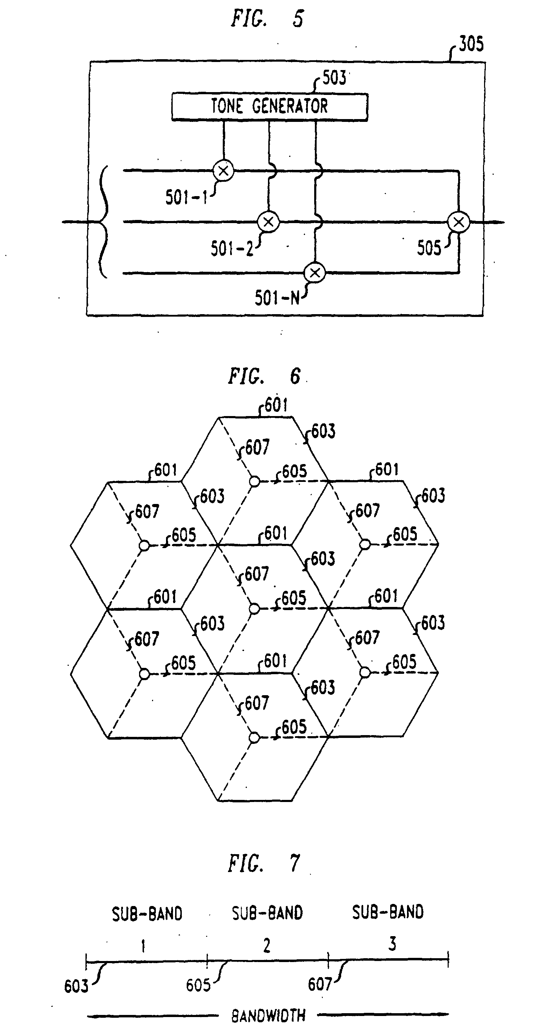

FIG. 4 shows a block diagram of an exemplary OFDM receiver 401. As with FIG. 3 because of its high level, whether or not the diagram of FIG. 4 depicts a prior art OFDM receiver or an OFDM embodying the principles of the invention depends on the particular implementation of the various components of FIG. 4. Also, as shown OFDM receiver 401 may be used in either a base station as the downlink receiver or in a mobile station as an uplink receiver. The particular embodiments necessary for either application will be described more fully hereinbelow.

OFDM receiver 401 includes a) cyclic prefix remover 409, b) tone-to-data extractor 405, c) tone assignment unit 407, and d) decoder 403.

The signal received at OFDM receiver 401, e.g., by an antenna and amplifier arrangement, not shown, is supplied to cyclic prefix remover 409. Cyclic prefix remover 409 removes the cyclic prefix from each total period of the received signal. The remaining signal, with period T, is supplied to tone-to-data extactor 405.

Tone-to-data extractor 405 extracts each information stream received on the various available tones which are being used by OFDM receiver 401 to develop an overall reconstructed data stream. Tones are assigned for use by OFDM receiver 401 by tone assignment unit 407, which conveys the assignments to data-to-tone remover 405. The tone assignment for a given user is not always the same within the available band, but instead the tones assigned to each user are hopped over time by tone assignment unit 407. As a result, it is necessary that there be correspondence between tone assignment unit 307 of OFDM transmitter 301 and tone assignment unit 407 of an associated OFDM receiver 401. Such correspondence is typically achieved through à priori arrangement, e.g., upon call set up.

Decoder 403 receives an overall information stream from transmission tone-to-data extractor 405 and decodes it to develop an overall output information stream. The decoding is often performed according to the inverse of the scheme used to encode the information stream. However, modifications may be made to the decoding scheme to account for channel and other effects to produce a more reliable decoded output than simply using the inverse of the encoding scheme. Alternatively, specific algorithms may be developed for use in decoding the received signal that take into account channel response, interference, and other effects. Such overall output information stream typically includes information streams generated on behalf of more than one user if OFDM receiver 401 is being used in a base station and only includes information streams for one user if OFDM receiver 401 is being used in a mobile station.

The resulting overall output stream is supplied to a destination for further pocessing. For example, if the information stream is voice and OFDM receiver 401 is within a mobile station, then the information stream is supplied to be converted to an audible signal that is played for the user. If the information stream is voice and OFDM receiver 401 is within a base station, the voice information may be separated for transmission to the ultimate destination, e.g., via a wireline network.

FIG. 5 shows further details of an exemplary implementation of data-to-tone applier 305 for a base station. Each of multipliers 501 multiplies a particular information stream by a sinusoidal waveform which is one of the orthogonal tones and is generated by tone generator 503. The resulting modulated signals are then summed by adder 505. Typically, data-to-tone applier 305 is implemented digitally, e.g., by a processor performing the functionality of multipliers 501, tone generator 503, and adder 505 using digital representations of the orthogonal tones.

The same general architecture as shown in FIG. 5 may be used to implement data-to-tone applier 305 for a mobile station. However, instead of covering the entire range of N orthogonal tones used within the cell by the base station by having N multipliers, only the maximum number of orthogonal tones used by the mobile station need have available multipliers. Since many mobile stations are used strictly for voice, only one multiplier need be provided. However, since, as will be described in more detail hereinbelow, the tone assignments for each user are changed, it is necessary that the tone generator in a mobile station be able to generate the entire range of N orthogonal tones. Furthermore, if only one tone is used, adder 505 may be dispensed with.

As described above, the tones assigned to any particular information stream is changed periodically. This is known in the art generally as frequency hopping, and is referred to herein more specifically as tone hopping.

In OFDM systems, the antenna ultimately transmitting the overall encoded information stream as applied to the various available tones may be a directional antenna so that sectorization of the cell may be employed as a way to reduce the intercell interference.

Not only is the cell sectorized from a transmission point of view by the directionality of the downlink antenna, but the OFDM tone set employed in each cell is correspondingly sectorized, i.e., each sector in the cell is allocated a set of tones within a sub-band of the available frequency bandwidth for use when transmitting into that sector.

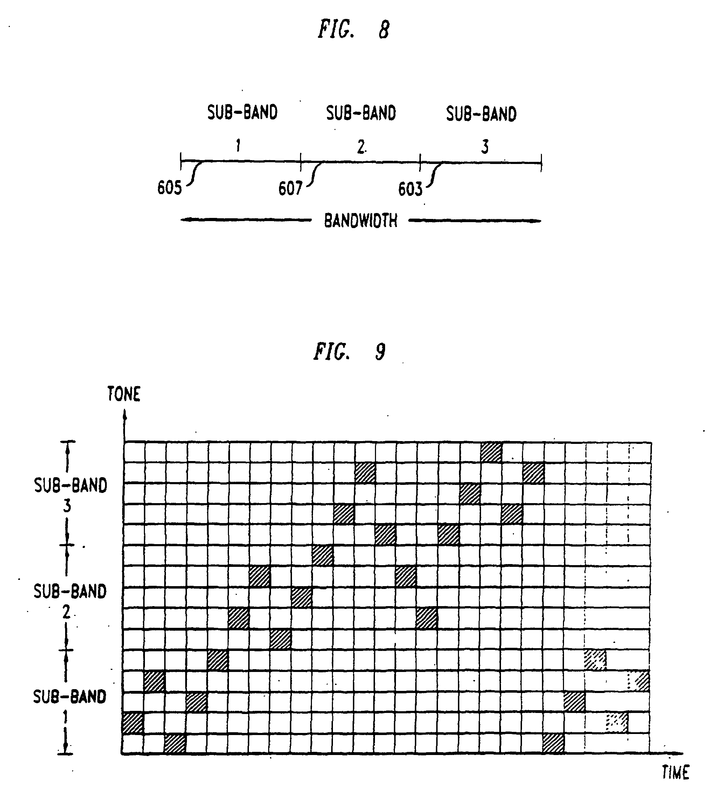

FIG. 6 shows several contiguous hexagonally shaped cells 601. Within hexagonally shaped cells 601 all sectors with the same directional orientation, e.g., sets of sectors 603, 605 and 607, are allocated tones within the same sub-band, as indicated by labels 1, 2, and 3. FIG. 7 shows one allocation of sub-band assignment for sets of sectors 603, 605, and 607 to sub-bands 1, 2, and 3, respectively.

The sub-bands assigned to each sector are periodically changed, or "hopped", among the available sub-bands within the totally available bandwidth. Thus, FIG. 8 shows another, e.g., later, allocation of sub-band assignment for sets of sectors 603, 605, and 607 to sub-bands 3, 1, and 2, respectively.

Such sub-band hopping is preferably a so-called "slow" hopping, in that it is not performed on a symbol-by-symbol basis but instead occurs only after more than one symbol has been transmitted in a sector on tones within the sub-band. Furthermore, the slow hopping of the sub-bands can be no faster than the slow hopping that may be employed in the uplink, i.e., the link from the mobile terminal to the base station, such as is described in European Patent Application EP1 039 683.

FIG. 9 shows an exemplary hopping pattern for the mobile terminal of one user. Each column represents a symbol or set of symbols that is transmitted, for a given time period. The length of the time period and the length of the symbol period T determine whether each column represents a single symbol or a set of symbols. However, preferably, in the downlink each column represents a single symbol and in the uplink each column represents a set of symbols. The rows. of FIG. 9 represents a tone that is used to transmit the user's symbol or set of symbols. The tones included within sub-bands 1, 2, and 3, are identified on the Y-axis of FIG. 9.

According to the exemplary hopping pattern of FIG. 9, the user's mobile terminal first experiences several symbol periods, e.g., 5, within sub-band 1 using various tones therein, at which point the sector the user's mobile terminal is located in switches to sub-band 2. The user's mobile terminal then experiences several symbol periods within sub-band 2, at which point the sector the user's mobile terminal is located in switches to sub-band 3. After 3 symbol periods, the user's mobile terminal leaves the sector it was located in and enters another sector of the same cell that is using tones in sub-band 2. The user's mobile terminal thus experiences an additional two symbol periods in sub-band 2, at which point the new sector in which the user's mobile terminal became located in hops to sub-band 3. The user's mobile terminal then experiences 5 symbols in sub-band 3. Finally, the new sector that the user's mobile terminal is located in hops back to sub-band 1, and the user's mobile terminal employs 5 symbols in sub-band 1, whereupon the user turns off his mobile terminal.

Note that there is no requirement for user to experience each tone in a sub-band before the sub-band employed by the user is changed.

The sub-bands assigned to the various sectors are preferably, identical in bandwidth, as well as contiguous, continuous, and nonoverlapping in the frequency domain. Note, however that the sub-bands assigned to the various sectors may be overlapping as such an arrangement may be able to achieve higher capacity for the entire system. Additionally, the sub-bands need not have identical bandwidths, so that some sub-bands may include more tones than other sub-bands. Furthermore, the tones making up a sub-band may change dynamically. In fact, the tones making up a sub-band need not be contiguous in the frequency domain. However, the system with contiguous sub bands may require less tones for use as pilot signals.

A pilot signal is a signal that is known to the receiver, and so the pilot signal as received can be used for purposes such as channel estimation, e.g., by figuring out the operation performed by the channel to the pilot signal as transmitted in order to develop the pilot signal as received.

Each sector employs its own pilot signal, which is assigned one or more tones within the sub-band currently employed by that sector. Thus, for the above example shown in FIGs. 6-8, there would be three pilot signals in the downlink, one within sub-band 1, another within sub-band 2, and a third within sub-band 3. The tones used for the pilot signal are hopped along with all the other tones carrying user information. If more than one tone is employed as the pilot signal, the tones making up the pilot signal may be separated from each other. Such separation may be used' to achieve better channel estimation, because, by distributing the tones used by the pilot signal across the sub-bands, the channel effects experienced by the tones of the pilot signal are more likely to be representative of the channel effects experienced by adjacent tones carrying user data.

Similarly, for the uplink, which is the channels from the mobile terminal to the base station, the base station may employ a directional receiver antenna. Preferably, the mobile terminal only transmits on a tone that is within a sub-band that is allocated to the sector in which the mobile terminal is located. This sub-band, however, need not correspond to the same location within the bandwidth as the sub-band used by the downlink to communicate with the mobile terminal.

## Claims

1. A method for operating a cellular orthogonal frequency division multiplexing, OFDM, based spread spectrum multiple access wireless system, employing within a cell of said system a plurality of directional antennas each oriented so as to divide said cell into a plurality of sectors, each of said sectors corresponding to one of said directional antennas, the method being **CHARACTERIZED BY** the steps of:
dividing a frequency spectrum available to said OFDM based spread spectrum multiple access wireless system into a plurality of sub-bands;
assigning a first respective one of each of said sub-bands to each respective one of said sectors;
assigning at least a first tone for communication to each terminal within each of said sectors, each first tone assigned to each of said terminals being within said first sub-band assigned to the one of said sectors within which said each terminal is located;
using said assigned first tones to communicate at least one symbol;
assigning at least a second tone for communication to each terminal within each of said sectors, each second tone assigned to each of said terminals being within said first sub-band assigned to the one of said sectors within which said each terminal is located;
using said assigned second tones to communicate at least one symbol;
assigning a second respective one of each of said sub-bands to each respective one of said sectors; and
assigning at least a third tone for communication to each terminal within each of said sectors, each third tone assigned to each of said terminals being within said second sub-band assigned to the one of said sectors within which said each terminal is located.

2. A method as claimed in claim 1 wherein said first tone is initially used for communication, subsequently said second tone is used for communication, and subsequent to use of said second tone said third tone is used for communication.

3. A method as claimed in claim 1 comprising the steps of:
using said assigned third tones to communicate at least one symbol; and
assigning at least a fourth tone for communication to each terminal within each of said sectors, each fourth tone assigned to each of said terminals being within said second sub-band assigned to the one of said sectors within which said each terminal is located.

4. A method as claimed in claim 1 wherein said first sub-band assigned to any particular one of said sectors is different from said second sub-band assigned to said particular one of said sectors.

5. A method as claimed in claim 1 wherein each of said sub-bands is nonoverlapping in the frequency domain with any other of said sub-bands; or is continuous in the frequency domain; or occupies a contiguous spectrum in the frequency domain.

6. A method as claimed in claim 1 wherein each of said sectors employs its own respective pilot signal, each said pilot signal being made up of one or more tones within the one of said sub-bands currently assigned to the one of said sectors employing said pilot signal.

7. A method as claimed in claim 1 wherein each terminal only transmits on a tone that is within said sub-band that is presently assigned to the sector in which said each mobile terminal is located.

8. A method for operating a cellular orthogonal frequency division multiplexing, OFDM, based spread spectrum multiple access wireless system, employing within a cell of said system a plurality of directional antennas each oriented so as to divide said cell into a plurality of sectors, each of said sectors corresponding to one of said directional antennas, the method being **CHARACTERIZED BY** the steps of:
dividing the frequency spectrum available to said OFDM based spread spectrum multiple access wireless system into a plurality of sub-bands;
assigning a first respective one of each of said sub-bands to each respective one of said sectors;
assigning at least a first tone for communication to each terminal within each of said sectors, each first tone assigned to each of said terminals being within said first sub-band assigned to the one of said sectors within which said each terminal is located;
using said assigned first tones to communicate a plurality of symbols;
assigning a second respective one of each of said sub-bands to each respective one of said sectors; and
assigning at least a second tone for communication to each terminal within each of said sectors, each second tone assigned to each of said terminals being within said second sub-band assigned to the one of said sectors within which said each terminal is located.

9. A method as claimed in claim 8 comprising the step of using said assigned second tones to communicate a plurality of symbols.

10. A method as claimed in claim 1 or 8 wherein at least one of said sub-bands remains unassigned to any sector after each of said assigning steps.

11. Software in a computer readable form for use in a tone assignment unit of a cell of a cellular orthogonal frequency division multiplexing, OFDM, based spread spectrum multiple access wireless system in which a frequency spectrum available to said OFDM based spread spectrum multiple access wireless system is divided into a plurality of sub-bands, said cell being divided into a plurality of sectors, each of said sectors corresponding to one of a plurality of directional antennas, said tone assignment unit including a processor for executing software, said software being **CHARACTERIZED BY**:
a module for assigning a first respective one of each of said sub-bands to each respective one of said sectors;
a module for assigning at least a first tone for communication to each terminal within each of said sectors, each first tone assigned to each of said terminals being within said first sub-band assigned to the one of said sectors within which said each terminal is located;
a module for assigning a second respective one of each of said sub-bands to each respective one of said sectors after said assigned first tones are used to communicate a plurality of symbols; and
a module for assigning at least a second tone for communication to each terminal within each of said sectors, each second tone assigned to each of said terminals being within said second sub-band assigned to the one of said sectors within which said each terminal is located.

12. Software in a computer readable form for use in a tone assignment unit of a cell of a cellular orthogonal frequency division multiplexing, OFDM, based spread spectrum multiple access wireless system in which a frequency spectrum available to said OFDM based spread spectrum multiple access wireless system is divided into a plurality of sub-bands, said cell being divided into a plurality of sectors, each of said sectors corresponding to one of a plurality of directional antennas, said tone assignment unit including a processor for executing software, said software being
**CHARACTERIZED BY**:
a module for assigning a first respective one of each of said sub-bands to each respective one of said sectors;
a module for assigning at least a first tone for communication to each terminal within each of said sectors, each first tone assigned to each of said terminals being within said first sub-band assigned to the one of said sectors within which said each terminal is located;
a module for assigning at least a second tone for communication to each terminal within each of said sectors, each second tone assigned to each of said terminals being within said first sub-band assigned to the one of said sectors within which said each terminal is located after said assigned first tones are used to communicate at least one symbol;
a module for assigning a second respective one of each of said sub-bands to each respective one of said sectors after said assigned second tones are used to communicate at least one symbol; and
a module for assigning at least a third tone for communication to each terminal within each of said sectors, each third tone assigned to each of said terminals being within said second sub-band assigned to the one of said sectors within which said each terminal is located.

13. Software as claimed in claim 11 or 12 and adapted such that at least one of said sub-bands remains unassigned to any sector after each of said assigning modules operates.

14. Apparatus [301] for assigning tones in a cellular orthogonal frequency division multiplexing, OFDM, based spread spectrum multiple access wireless system, said system employing within a cell of said system a plurality of directional antennas each oriented so as to divide said cell into a plurality of sectors, each of said sectors corresponding to one of said directional antennas, the apparatus being **CHARACTERIZED BY**:
means [307] for dividing a frequency spectrum available to said OFDM based spread spectrum multiple access wireless system into a plurality of sub-bands;
means [307] for assigning a first respective one of each of said sub-bands to each respective one of said sectors;
means [307] for assigning at least a first tone for communication to each terminal within each of said sectors, each first tone assigned to each of said terminals being within said first sub-band assigned to the one of said sectors within which said each terminal is located;
means [305] for using said assigned first tones to communicate at least one symbol;
means [307] for assigning at least a second tone for communication to each terminal within each of said sectors, each second tone assigned to each of said terminals being within said first sub-band assigned to the one of said sectors within which said each terminal is located;
means [305] for using said assigned second tones to communicate at least one symbol;
means [307] for assigning a second respective one of each of said sub-bands to each respective one of said sectors; and
means [307] for assigning at least a third tone for communication to each terminal within each of said sectors, each third tone assigned to each of said terminals being within said second sub-band assigned to the one of said sectors within which said each terminal is located.

15. Apparatus as claimed in 14 wherein the operation of said apparatus is ordered so that said first tone is initially used for communication, subsequently said second tone is used for communication, and subsequent to use of said second tone said third tone is used for communication.

16. Apparatus as claimed in 14 comprising:
means [305] for using said assigned third tones to communicate at least one symbol; and
means [307] for assigning at least a fourth tone for communication to each terminal within each of said sectors, each fourth tone assigned to each of said terminals being within said second sub-band assigned to the one of said sectors within which said each terminal is located.

17. Apparatus [301] for assigning tones in a cellular orthogonal frequency division multiplexing, OFDM, based spread spectrum multiple access wireless system, said system employing within a cell of said system a plurality of directional antennas each oriented so as to divide said cell into a plurality of sectors, each of said sectors corresponding to one of said directional antennas, the apparatus being **CHARACTERIZED BY**:
means [307] for dividing the frequency spectrum available to said OFDM based spread spectrum multiple access wireless system into a plurality of sub-bands;
means [307] for assigning a first respective one of each of said sub-bands to each respective one of said sectors;
means [307] for assigning at least a first tone for communication to each terminal within each of said sectors, each first tone assigned to each of said terminals being within said first sub-band assigned to the one of said sectors within which said each terminal is located;
means [307] for using said assigned first tones to communicate a plurality of symbols;
means [305] for assigning a second respective one of each of said sub-bands to each respective one of said sectors; and
means [307] for assigning at least a second tone for communication to each terminal within each of said sectors, each second tone assigned to each of said terminals being within said second sub-band assigned to the one of said sectors within which said each terminal is located.

18. Apparatus as claimed in claim 17 and adapted such that at least one of said sub-bands remains unassigned to any sector after each of said means for assigning operates.

19. A method for operating a cellular orthogonal frequency division multiplexing, OFDM, based spread spectrum multiple access wireless system, employing within a cell of said system a plurality of directional antennas each oriented so as to divide said cell into a plurality of sectors, each of said sectors corresponding to one of said directional antennas, the method being **CHARACTERIZED BY** the steps of:
assigning to each of said sectors a sub-band from within a frequency spectrum available to said OFDM based spread spectrum multiple access wireless system;
using tones within said assigned sub-bands for communication with remote terminals within said sectors for at least two symbol periods;
assigning to each of said sectors a new one of said sub-bands; and
using tones within said new assigned sub-bands for communication with remote terminals within said sectors for at least one symbol period.

20. Apparatus for operating a cellular orthogonal frequency division multiplexing, OFDM, based spread spectrum multiple access wireless system, employing within a cell of said system a plurality of directional antennas each oriented so as to divide said cell into a plurality of sectors, each of said sectors corresponding to one of said directional antennas, the apparatus being **CHARACTERIZED BY**:
a tone assignment unit [307] for assigning to each of said sectors a sub-band from within a frequency spectrum available to said OFDM based spread spectrum multiple access wireless system and for specifying particular tones within said assigned sub-bands for communication with terminals within said sectors for at least two symbol periods; and for further assigning to each of said sectors a new one of said sub-bands and for specifying tones within said new assigned sub-bands for communication with said terminals within said sectors for at least one symbol period; and
a data-to-tone applier [305] for applying data destined for said terminals with at least one of said tones assigned by said tone assignment unit.

21. Apparatus as claimed in claim 20 wherein said data-to-tone applier is adapted to receive as an input data from an encoder [303].

22. Apparatus as claimed in claim 20 wherein said data-to-tone applier is adapted to supply said tones to which data has been applied as an input to a cyclic prefix prepender [309].

23. Apparatus as claimed in claim 20 comprising a tone-to-data extractor [405] adapted to extract data from received tones, said received tones being from said terminals, and wherein each terminal is adapted to transmit only on a tone that is within said sub-band that is presently assigned to the sector in which said each mobile terminal is located.

24. A method for use in operating a cellular orthogonal frequency division multiplexing, OFDM, based spread spectrum multiple access wireless system terminal, in which a cell of said system employs a plurality of directional antennas each oriented so as to divide said cell into a plurality of sectors, each of said sectors corresponding to one of said directional antennas, the method being **CHARACTERIZED by** the steps of:
transmitting information from each terminal within a sector of said cell on one or more tones selected to be within a sub-band of a frequency spectrum available to said OFDM based spread spectrum multiple access wireless system that is presently assigned to said sector with which said terminals are located
changing which sub-band is assigned to said sector; and
repeating said transmitting step.

25. A method for use in operating a cellular orthogonal frequency division multiplexing, OFDM, based spread spectrum multiple access wireless system terminal, in which a cell of said system employs a plurality of directional antennas each oriented so as to divide said cell into a plurality of sectors, each of said sectors corresponding to one of said directional antennas, the method being **CHARACTERIZED by** steps of:
receiving information from each terminal within a sector of said cell on one or more tones selected to be within a sub-band of a frequency spectrum available to said OFDM based spread spectrum multiple access wireless system that is presently assigned to said sector with which said terminals are located
changing which sub-band is assigned to said sector; and
repeating said receiving step.

## Patentansprüche

1. Verfahren zum Betreiben eines drahtlosen zellularen OFDM-(orthogonal frequency division multiplex-)basierenden Spreizspektrumsystems mit Mehrfachzugriff, Einsetzen einer Mehrzahl von Richtantennen in einer Zelle des besagten Systems, die jeweils so ausgerichtet sind, daß sie die Zelle in eine Mehrzahl von Sektoren einteilen,
wobei jeder dieser Sektoren einer dieser Richtantennen entspricht, **gekennzeichnet durch** folgende Schritte:
Einteilen eines dem drahtlosen OFDM-basierenden Spreizspektrumsystem mit Mehrfachzugriff zur Verfügung stehenden Frequenzspektrums in eine Mehrzahl von Teilbändern;
Zuweisen eines jeweils ersten der Teilbänder zu jeweils einem der Sektoren;
Zuweisen von mindestens einem ersten Ton zur Kommunikation zu jedem Endgerät in jedem der Sektoren, wobei jeder erste jedem der Endgeräte zugewiesene Ton innerhalb des ersten Teilbandes liegt, das dem einen der Sektoren zugewiesen ist, in dem sich das jeweilige Endgerät befindet;
Benutzen der zugewiesenen ersten Töne zum Übermitteln von mindestens einem Symbol;
Zuweisen von mindestens einem zweiten Ton zur Kommunikation zu jedem Endgerät in jedem der Sektoren, wobei jeder zweite jedem der Endgeräte zugewiesene Ton innerhalb des ersten Teilbandes liegt, das dem einen der Sektoren zugewiesen ist, in dem sich das jeweilige Endgerät befindet;
Benutzen der zugewiesenen zweiten Töne zum Übermitteln von mindestens einem Symbol;
Zuweisen eines jeweiligen zweiten Teilbandes zu einem jeweiligen der Sektoren; und
Zuweisen von mindestens einem dritten Ton zur Kommunikation zu jedem Endgerät in jedem der Sektoren, wobei jeder dritte jedem der Endgeräte zugewiesene Ton innerhalb des zweiten Teilbandes liegt, das dem einen der Sektoren zugewiesen ist, in dem sich das jeweilige Endgerät befindet.

2. Verfahren nach Anspruch 1, wobei anfangs der erste Ton zur Kommunikation benutzt wird, danach der zweite Ton zur Kommunikation benutzt wird und nach Benutzung des zweiten Tons der dritte Ton zur Kommunikation benutzt wird.

3. Verfahren nach Anspruch 1 mit folgenden Schritten:
Benutzen der zugewiesenen dritten Töne zum Übermitteln von mindestens einem Symbol; und
Zuweisen von mindestens einem vierten Ton zur Kommunikation zu jedem Endgerät in jedem der Sektoren, wobei jeder vierte jedem der Endgeräte zugewiesene Ton in dem zweiten Teilband liegt, das dem einen der Sektoren zugewiesen ist, in dem sich das jeweilige Endgerät befindet.

4. Verfahren nach Anspruch 1, wobei das einem bestimmten der Sektoren zugewiesene erste Teilband sich von dem zweiten dem bestimmten der Sektoren zugewiesenen Teilband unterscheidet.

5. Verfahren nach Anspruch 1, wobei die jeweiligen Teilbänder kein anderes der Teilbänder im Frequenzbereich überlappen oder im Frequenzbereich fortlaufend sind oder ein angrenzendes Spektrum im Frequenzbereich belegen.

6. Verfahren nach Anspruch 1, wobei jeder der Sektoren sein eigenes entsprechendes Pilotsignal benutzt, das jeweils aus einem oder mehreren Tönen in dem einen der Teilbänder besteht, das zur zeit dem einen der Sektoren zugewiesen ist, der das besagte Pilotsignal anwendet.

7. Verfahren nach Anspruch 1, wobei jedes Endgerät nur mit einem Ton überträgt, der in dem Teilband liegt, das gegenwärtig dem Sektor zugewiesen ist, in dem sich das jeweilige mobile Endgerät befindet.

8. Verfahren zum Betreiben eines drahtlosen zellularen OFDM-(orthogonal frequency division multiplex-)basierenden Spreizspektrumsystems mit Mehrfachzugriff, Einsetzen einer Mehrzahl von Richtantennen in einer Zelle des besagten Systems, die jeweils so ausgerichtet sind, daß sie die Zelle in eine Mehrzahl von Sektoren einteilen, wobei jeder dieser Sektoren einer dieser Richtantennen entspricht, **gekennzeichnet durch** folgende Schritte:
Einteilen des dem drahtlosen OFDM-basierenden Spreizspektrumsystem mit Mehrfachzugriff zur Verfügung stehenden Frequenzspektrums in eine Mehrzahl von Teilbändern;
Zuweisen eines jeweils ersten der Teilbänder zu jeweils einem der Sektoren;
Zuweisen von mindestens einem ersten Ton zur Kommunikation zu jedem Endgerät in jedem der Sektoren, wobei jeder erste jedem der Endgeräte zugewiesene Ton innerhalb des ersten Teilbandes liegt, das dem einen der Sektoren zugewiesen ist, in dem sich das jeweilige Endgerät befindet;
Benutzen der zugewiesenen ersten Töne zum Übermitteln einer Mehrzahl von Symbolen;
Zuweisen eines zweiten der jeweiligen Teilbänder zu jedem entsprechenden der Sektoren; und
Zuweisen von mindestens einem zweiten Ton zur Kommunikation zu jedem Endgerät in jedem der Sektoren, wobei jeder zweite jedem der Endgeräte zugewiesene Ton in dem zweiten Teilband liegt, das dem einen der Sektoren zugewiesen ist, in dem sich das jeweilige Endgerät befindet.

9. Verfahren nach Anspruch 8 mit dem Schritt des Benutzens der zugewiesenen. zweiten Töne zum Übermitteln einer Mehrzahl von Symbolen.

10. Verfahren nach Anspruch 1 oder 8, wobei mindestens eines der Teilbänder nach jedem der Schritte des Zuweisens irgendeinem Sektor unzugewiesen bleibt.

11. Software in computerlesbarer Form zur Benutzung in einer Tonzuweisungseinheit einer Zelle eines drahtlosen zellularen OFDM-(orthogonal frequency division multiplex-)basierenden Spreizspektrumsystems mit Mehrfachzugriff, in dem ein dem drahtlosen OFDM-basierenden Spreizspektrumsystem mit Mehrfachzugriff zur Verfügung stehendes Frequenzspektrum in eine Mehrzahl von Teilbändern eingeteilt wird, wobei die Zelle in eine Mehrzahl von Sektoren eingeteilt wird, die jeweils einer von einer Mehrzahl von Richtantennen entsprechen,
wobei die Tonzuweisungseinheit einen Prozessor zur Ausführung von Software enthält, die durch folgendes **gekennzeichnet ist**:
ein Modul zum Zuweisen eines ersten der jeweiligen Teilbänder zu einem jeweiligen der Sektoren;
ein Modul zum Zuweisen von mindestens einem ersten Ton zur Kommunikation zu jedem Endgerät in jedem. der Sektoren, wobei jeder erste jedem der Endgeräte zugewiesene Ton in dem ersten Teilband liegt, das dem einen der Sektoren zugewiesen ist, in dem sich das jeweilige Endgerät befindet;
ein Modul zum Zuweisen eines zweiten der jeweiligen Teilbänder zu jedem entsprechenden der Sektoren, nachdem die zugewiesenen ersten Töne zum Übermitteln einer Mehrzahl von Symbolen benutzt werden; und
ein Modul zum Zuweisen von mindestens einem zweiten Ton zur Kommunikation zu jedem Endgerät in jedem der Sektoren, wobei jeder zweite jedem der Endgeräte zugewiesene Ton in dem zweiten Teilband liegt, das dem einen der Sektoren zugewiesen ist, in dem sich das jeweilige Endgerät befindet.

12. Software in computerlesbarer Form zur Benutzung in einer Tonzuweisungseinheit einer Zelle eines drahtlosen zellularen OFDM-(orthogonal frequency division multiplex-)basierenden Spreizspektrumsystems mit Mehrfachzugriff, in dem ein dem drahtlosen OFDM-basierenden Spreizspektrumsystem mit Mehrfachzugriff zur Verfügung stehendes Frequenzspektrum in eine Mehrzahl von Teilbändern eingeteilt wird, wobei die Zelle in eine Mehrzahl von Sektoren eingeteilt wird, die jeweils einer von einer Mehrzahl von Richtantennen entsprechen,
wobei die Tonzuweisungseinheit einen Prozessor zur Ausführung von Software enthält, die durch folgendes **gekennzeichnet ist**:
ein Modul zum Zuweisen eines ersten der jeweiligen Teilbänder zu einem jeweiligen der Sektoren;
ein Modul zum Zuweisen von mindestens einem ersten Ton zur Kommunikation zu jedem Endgerät in jedem der Sektoren, wobei jeder erste jedem der Endgeräte zugewiesene Ton in dem ersten Teilband liegt, das dem einen der Sektoren zugewiesen ist, in dem sich das jeweilige Endgerät befindet;
ein Modul zum Zuweisen von mindestens einem zweiten Ton zur Kommunikation zu jedem Endgerät in jedem der Sektoren, wobei jeder zweite jedem der Endgeräte zugewiesene Ton innerhalb des ersten Teilbandes liegt, das dem einen der Sektoren zugewiesen ist, in dem sich das jeweilige Endgerät befindet, nachdem die zugewiesenen ersten Töne zum Übermitteln von mindestens einem Symbol benutzt werden;
ein Modul zum Zuweisen eines zweiten der jeweiligen Teilbänder zu einem jeweiligen der Sektoren, nachdem die zugewiesenen zweiten Töne zum Übermitteln von mindestens einem Symbol benutzt werden; und
ein Modul zum Zuweisen von mindestens einem dritten Ton zur Kommunikation zu jedem Endgerät in jedem der Sektoren, wobei jeder dritte jedem der Endgeräte zugewiesene Ton in dem zweiten Teilband liegt, das dem einen der Sektoren zugewiesen ist, in dem sich das jeweilige Endgerät befindet.

13. Software nach Anspruch 11 oder 12 und dazu geeignet, daß mindestens eines der Teilbänder nach Betrieb jedes der Zuweisungsmodulen irgendeinem Sektor unzugewiesen bleibt.

14. Vorrichtung [301] zum Zuweisen von Tönen in einem drahtlosen zellularen OFDM-(orthogonal frequency division multiplex-)basierenden Spreizspektrumsystem mit Mehrfachzugriff, das in einer Zelle des Systems eine Mehrzahl von Richtantennen benutzt, die jeweils so ausgerichtet sind, daß sie die Zelle in eine Mehrzahl von Sektoren einteilen, die jeweils einer der Richtantennen entsprechen, **gekennzeichnet durch** folgendes:
Mittel [307] zum Einteilen eines dem drahtlosen OFDM-basierenden Spreizspektrumsystem mit Mehrfachzugriff zur Verfügung stehenden Frequenzspektrums in eine Mehrzahl von Teilbändern;
Mittel [307] zum Zuweisen eines ersten der jeweiligen Teilbänder zu einem jeweiligen der Sektoren;
Mittel [307] zum Zuweisen von mindestens einem ersten Ton zur Kommunikation zu jedem Endgerät in jedem der Sektoren, wobei jeder erste jedem der Endgeräte zugewiesene Ton in dem ersten Teilband liegt, das dem einen der Sektoren zugewiesen ist, in dem sich das jeweilige Endgerät befindet;
Mittel [305] zum Benutzen der zugewiesenen ersten Töne zum Übermitteln von mindestens einem Symbol;
Mittel [307] zum Zuweisen von mindestens einem zweiten Ton zur Kommunikation zu jedem Endgerät in jedem der Sektoren, wobei jeder zweite jedem der Endgeräte zugewiesene Ton in dem ersten Teilband liegt, das dem einen der Sektoren zugewiesen ist, in dem sich das jeweilige Endgerät befindet;
Mittel [305] zum Benutzen der zugewiesenen zweiten Töne zum Übermitteln von mindestens einem Symbol;
Mittel [307] zum Zuweisen eines zweiten der jeweiligen Teilbänder zu einem jeweiligen der Sektoren; und
Mittel [307] zum Zuweisen von mindestens einem dritten Ton zur Kommunikation zu jedem Endgerät in jedem der Sektoren, wobei jeder dritte jedem der Endgeräte zugewiesene Ton in dem zweiten Teilband liegt, das dem einen der Sektoren zugewiesen ist, in dem sich das jeweilige Endgerät befindet.

15. Vorrichtung nach Anspruch 14, wobei die Funktionsweise der Vorrichtung so angeordnet ist, daß anfänglich der erste Ton zur Kommunikation benutzt wird, danach der zweite Ton zur Kommunikation benutzt wird und nach Benutzung des zweiten Tons der dritte Ton zur Kommunikation benutzt wird.

16. Vorrichtung nach Anspruch 14 mit folgendem:
Mitteln [305] zum Benutzen der zugewiesenen dritten Töne zum Übermitteln von mindestens einem Symbol; und
Mitteln [307] zum Zuweisen von mindestens einem vierten Ton zur Kommunikation zu jedem Endgerät in jedem der Sektoren, wobei jeder vierte jedem der Endgeräte zugewiesene Ton in dem zweiten Teilband liegt, das dem einen der Sektoren zugewiesen ist, in dem sich das jeweilige Endgerät befindet.

17. Vorrichtung [301] zum Zuweisen von Tönen in einem drahtlosen zellularen OFDM-(orthogonal frequency division multiplex-)basierenden Spreizspektrumsystem mit Mehrfachzugriff, das in einer Zelle des Systems eine Mehrzahl von Richtantennen benutzt, die jeweils so ausgerichtet sind, daß sie die Zelle in eine Mehrzahl von Sektoren einteilen, die jeweils einer der Richtantennen entsprechen, **gekennzeichnet durch** folgendes:
Mittel [307] zum Einteilen des dem drahtlosen OFDM-basierenden Spreizspektrumsystem mit Mehrfachzugriff zur Verfügung stehenden Frequenzspektrums in eine Mehrzahl von Teilbändern;
Mittel [307] zum Zuweisen eines ersten der jeweiligen Teilbänder zu einem jeweiligen der Sektoren;
Mittel [307] zum Zuweisen von mindestens einem ersten Ton zur Kommunikation zu jedem Endgerät in jedem der Sektoren, wobei jeder erste jedem der Endgeräte zugewiesene Ton in dem ersten Teilband liegt, das dem einen der Sektoren zugewiesen ist, in dem sich das jeweilige Endgerät befindet;
Mittel [307] zum Benutzen der zugewiesenen ersten Töne zum Übermitteln einer Mehrzahl von Symbolen;
Mittel [305] zum Zuweisen eines zweiten der jeweiligen Teilbänder zu einem jeweiligen der Sektoren; und
Mittel [307] zum Zuweisen von mindestens einem zweiten Ton zur Kommunikation zu jedem Endgerät in jedem der Sektoren, wobei jeder zweite jedem der Endgeräte zugewiesene Ton in dem zweiten Teilband liegt, das dem einen der Sektoren zugewiesen ist, in dem sich das jeweilige Endgerät befindet.

18. Vorrichtung nach Anspruch 17 und dazu geeignet, daß mindestens eines der Teilbänder nach Betrieb jedes der Zuweisungsmodulen irgendeinem Sektor unzugewiesen bleibt.

19. Verfahren zum Betreiben eines drahtlosen zellularen OFDM-(orthogonal frequency division multiplex-)basierenden Spreizspektrumsystems mit Mehrfachzugriff, Einsetzen einer Mehrzahl von Richtantennen in einer Zelle des besagten Systems, die jeweils so ausgerichtet sind, daß sie die Zelle in eine Mehrzahl von Sektoren einteilen, wobei jeder dieser Sektoren einer dieser Richtantennen entspricht, **gekennzeichnet durch** folgende Schritte:
Zuweisen zu jedem der Sektoren eines Teilbandes aus einem Frequenzspektrum, das dem drahtlosen OFDM-basierenden Spreizspektrumsystem mit Mehrfachzugriff zur Verfügung steht;
Benutzen von Tönen in den zugewiesenen Teilbändern zur Kommunikation mit abgesetzten Endgeräten in den Sektoren für die Dauer von mindestens zwei Symbolperioden;
Zuweisen eines neuen der Teilbänder zu jedem der Sektoren; und
Benutzen von Tönen in den neuen zugewiesenen Teilbändern zur Kommunikation mit abgesetzten Endgeräten in den Sektoren für die Dauer von mindestens einer Symbolperiode.

20. Vorrichtung zum Betreiben eines drahtlosen zellularen OFDM-(orthogonal frequency division multiplex-)basierenden Spreizspektrumsystems mit Mehrfachzugriff, Einsetzen einer Mehrzahl von Richtantennen in einer Zelle des besagten Systems, die jeweils so ausgerichtet sind, daß sie die Zelle in eine Mehrzahl von Sektoren einteilen, wobei jeder dieser Sektoren einer dieser Richtantennen entspricht, **gekennzeichnet durch** folgendes:
eine Tonzuweisungseinheit [307] zum Zuweisen zu jedem der Sektoren eines Teilbandes aus einem Frequenzspektrum, das dem drahtlosen OFDM-basierenden Spreizspektrumsystem mit Mehrfachzugriff zur Verfügung steht, und zum Angeben von bestimmten Tönen in den zugewiesenen Teilbändern zur Kommunikation mit Endgeräten in den Sektoren für die Dauer von mindestens zwei Symbolperioden; und zum weiteren Zuweisen zu jedem der Sektoren eines neuen der Teilbänder und zum Angeben von Tönen in den neuen zugewiesenen Teilbändern zur Kommunikation mit den Endgeräten in den Sektoren für die Dauer von mindestens einer Symbolperiode; und
eine Daten-zu-Ton-Anlegevorrichtung [305] zum Anlegen von für die Endgeräte bestimmten Daten,
wobei mindestens einer der Töne **durch** die Tonzuweisungseinheit zugewiesen wird.

21. Vorrichtung nach Anspruch 20, wobei die Daten-zu-Ton-Anlegevorrichtung zum Empfangen von Daten von einem Codierer [303] als Eingabe geeignet ist.

22. Vorrichtung nach Anspruch 20, wobei die Daten-zu-Ton-Anlegevorrichtung zum Zuführen der Töne, an die Daten angelegt worden sind, als Eingabe in eine Voranstellvorrichtung [309] eines zyklischen Präfixes geeignet ist.

23. Vorrichtung nach Anspruch 20 mit einem Ton-zu-Daten-Ausblender [405] zum Ausblenden von Daten aus empfangenen Tönen, die von den Endgeräten stammen, und wobei jedes Endgerät zur alleinigen Übertragung mit einem Ton geeignet ist, der in dem Teilband liegt, das gegenwärtig dem Sektor zugewiesen ist, in dem sich das jeweilige mobile Endgerät befindet.

24. Verfahren zur Verwendung beim Betreiben eines Endgeräts eines drahtlosen zellularen OFDM-(orthogonal frequency division multiplex-)basierenden Spreizspektrumsystems mit Mehrfachzugriff, bei dem eine Zelle des Systems eine Mehrzahl von Richtantennen benutzt, die jeweils so ausgerichtet sind, daß die Zelle in eine Mehrzahl von Sektoren eingeteilt wird, wobei die jeweiligen Sektoren einer der Richtantennen entsprechen, **gekennzeichnet durch** folgende Schritte:
Übertragen von Informationen von jedem Endgerät in einem Sektor der Zelle auf einem oder mehreren Tönen, die so ausgewählt sind, daß sie in einem Teilband eines Frequenzspektrums liegen, das dem drahtlosen OFDM-basierenden Spreizspektrumsystem mit Mehrfachzugriff zur Verfügung steht und das gegenwärtig dem Sektor zugewiesen ist, in dem sich die Endgeräte befinden,
Ändern, welches Teilband dem Sektor zugewiesen ist; und
Wiederholen des Schrittes des Übertragens.

25. Verfahren zur Verwendung beim Betreiben eines Endgeräts eines drahtlosen zellularen OFDM-(orthogonal frequency division multiplex-)basierenden Spreizspektrumsystems mit Mehrfachzugriff, bei dem eine Zelle des Systems eine Mehrzahl von Richtantennen benutzt, die jeweils so ausgerichtet sind, daß die Zelle in eine Mehrzahl von Sektoren eingeteilt wird, wobei die jeweiligen Sektoren einer der Richtantennen entsprechen, **gekennzeichnet durch** folgende Schritte:
Empfangen von Informationen von jedem Endgerät in einem Sektor der Zelle auf einem oder mehreren Tönen, die so ausgewählt sind, daß sie in einem Teilband eines Frequenzspektrums liegen, das dem drahtlosen OFDM-basierenden Spreizspektrumsystem mit Mehrfachzugriff zur Verfügung steht und das gegenwärtig dem Sektor zugewiesen ist, in dem sich die Endgeräte befinden,
Ändern, welches Teilband dem Sektor zugewiesen ist; und
Wiederholen des Schrittes des Empfangens.

## Revendications

1. Procédé d'exploitation d'un système sans fil cellulaire à accès multiple à spectre étalé basé sur le multiplexage par répartition en fréquence orthogonal (OFDM), employant dans une cellule dudit système une pluralité d'antennes directives orientées chacune de manière à diviser ladite cellule en une pluralité de secteurs, chacun desdits secteurs correspondant à une desdites antennes directives, le procédé étant **CARACTERISE PAR** les étapes de :
division d'un spectre de fréquences à la disposition dudit système sans fil à accès multiple à spectre étalé basé sur l'OFDM en une pluralité de sous-bandes ;
affectation d'une première sous-bande respective de chacune desdites sous-bandes à chaque secteur respectif desdits secteurs ;
affectation d'au moins une première tonalité de communication à chaque terminal dans chacun desdits secteurs, chaque première tonalité affectée à chacun desdits terminaux se trouvant dans ladite première sous-bande affectée au secteur desdits secteurs dans lequel est situé chaque dit terminal ;
utilisation desdites premières tonalités affectées en vue de communiquer au moins un symbole ;
affectation d'au moins une deuxième tonalité de communication à chaque terminal dans chacun desdits secteurs, chaque deuxième tonalité affectée à chacun desdits terminaux se trouvant dans ladite première sous-bande affectée au secteur desdits secteurs dans lequel est situé chaque dit terminal ;
utilisation desdites deuxièmes tonalités affectées en vue de communiquer au moins un symbole ;
affectation d'une deuxième sous-bande respective de chacune desdites sous-bandes à chaque secteur respectif desdits secteurs ; et
affectation d'au moins une troisième tonalité de communication à chaque terminal dans chacun desdits secteurs, chaque troisième tonalité affectée à chacun desdits terminaux se trouvant dans ladite deuxième sous-bande affectée au secteur desdits secteurs dans lequel est situé chaque dit terminal.

2. Procédé selon la revendication 1, dans lequel ladite première tonalité est initialement utilisée pour la communication, ensuite ladite deuxième tonalité est utilisée pour la communication, et après l'utilisation de ladite deuxième tonalité, ladite troisième tonalité est utilisée pour la communication.

3. Procédé selon la revendication 1, comprenant les étapes d' :
utilisation desdites troisièmes tonalités affectées en vue de communiquer au moins un symbole ; et
affectation d'au moins une quatrième tonalité de communication à chaque terminal dans chacun desdits secteurs, chaque quatrième tonalité affectée à chacun desdits terminaux se trouvant dans ladite deuxième sous-bande affectée au secteur desdits secteurs dans lequel est situé chaque dit terminal.

4. Procédé selon la revendication 1, dans lequel ladite première sous-bande affectée à n'importe quel secteur particulier desdits secteurs est différente de ladite deuxième sous-bande affectée audit secteur particulier desdits secteurs.

5. Procédé selon la revendication 1, dans lequel chacune desdites sous-bandes est non chevauchante dans le domaine fréquentiel avec une autre sous-bande quelconque desdites sous-bandes ; ou est continue dans le domaine fréquentiel ; ou occupe un spectre contigu dans le domaine fréquentiel.

6. Procédé selon la revendication 1, dans lequel chacun desdits secteurs emploie son propre signal pilote respectif, chaque dit signal pilote étant composé d'une ou de plusieurs tonalités dans la sous-bande desdites sous-bandes actuellement affectée au secteur desdits secteurs employant ledit signal pilote.

7. Procédé selon la revendication 1, dans lequel chaque terminal ne transmet que sur une tonalité qui se trouve dans ladite sous-bande qui est actuellement affectée au secteur dans lequel est situé chaque dit terminal mobile.

8. Procédé d'exploitation d'un système sans fil cellulaire à accès multiple à spectre étalé basé sur le multiplexage par répartition en fréquence orthogonal (OFDM), employant dans une cellule dudit système une pluralité d'antennes directives orientées chacune de manière à diviser ladite cellule en une pluralité de secteurs, chacun desdits secteurs correspondant à l'une desdites antennes directives, le procédé étant **CARACTERISE PAR** les étapes de :
division du spectre de fréquences à la disposition dudit système sans fil à accès multiple à spectre étalé basé sur l'OFDM en une pluralité de sous-bandes ;
affectation d'une première sous-bande respective de chacune desdites sous-bandes à chaque secteur respectif desdits secteurs ;
affectation d'au moins une première tonalité de communication à chaque terminal dans chacun desdits secteurs, chaque première tonalité affectée à chacun desdits terminaux se trouvant dans ladite première sous-bande affectée au secteur desdits secteurs dans lequel est situé chaque dit terminal ;
utilisation desdites premières tonalités affectées en vue de communiquer une pluralité de symboles ;
affectation d'une deuxième sous-bande respective de chacune desdites sous-bandes à chaque secteur respectif desdits secteurs ; et
affectation d'au moins une deuxième tonalité de communication à chaque terminal dans chacun desdits secteurs, chaque deuxième tonalité affectée à chacun desdits terminaux se trouvant dans ladite deuxième sous-bande affectée au secteur desdits secteurs dans lequel est situé chaque dit terminal.

9. Procédé selon la revendication 8, comprenant l'étape d'utilisation desdites deuxièmes tonalités affectées en vue de communiquer une pluralité de symboles.

10. Procédé selon la revendication 1 ou 8, dans lequel au moins une desdites sous-bandes reste non affectée à un quelconque secteur après chacune desdites étapes d'affectation.

11. Logiciel de forme lisible par machine destiné à être utilisé dans une unité d'affectation de tonalités d'une cellule d'un système sans fil cellulaire à accès multiple à spectre étalé basé sur le multiplexage par répartition en fréquence orthogonal (OFDM) dans lequel un spectre de fréquences à la disposition dudit système sans fil à accès multiple à spectre étalé basé sur l'OFDM est divisé en une pluralité de sous-bandes, ladite cellule étant divisée en une pluralité de secteurs, chacun desdits secteurs correspondant à une antenne d'une pluralité d'antennes directives, ladite unité d'affectation de tonalités comportant un processeur pour exécuter un logiciel, ledit logiciel étant **CARACTERISE PAR** :
un module pour affecter une première sous-bande respective de chacune desdites sous-bandes à chaque secteur respectif desdits secteurs ;
un module pour affecter au moins une première tonalité de communication à chaque terminal dans chacun desdits secteurs, chaque première tonalité affectée à chacun desdits terminaux se trouvant dans ladite première sous-bande affectée au secteur desdits secteurs dans lequel est situé chaque dit terminal ;
un module pour affecter une deuxième sous-bande respective de chacune desdites sous-bandes à chaque secteur respectif desdits secteurs après que lesdites premières tonalités affectées sont utilisées en vue de communiquer une pluralité de symboles ; et
un module pour affecter au moins une deuxième tonalité de communication à chaque terminal dans chacun desdits secteurs, chaque deuxième tonalité affectée à chacun desdits terminaux se trouvant dans ladite deuxième sous-bande affectée au secteur desdits secteurs dans lequel est situé chaque dit terminal.

12. Logiciel de forme lisible par machine destiné à être utilisé dans une unité d'affectation de tonalités d'une cellule d'un système sans fil cellulaire à accès multiple à spectre étalé basé sur un multiplexage par répartition en fréquence orthogonal (OFDM) dans lequel un spectre de fréquences à la disposition dudit système sans fil à accès multiple à spectre étalé basé sur l'OFDM est divisé en une pluralité de sous-bandes, ladite cellule étant divisée en une pluralité de secteurs, chacun desdits secteurs correspondant à une antenne d'une pluralité d'antennes directives, ladite unité d'affectation de tonalités comportant un processeur pour exécuter un logiciel, ledit logiciel étant **CARACTERISE PAR** :
un module pour affecter une première sous-bande respective de chacune desdites sous-bandes à chaque secteur respectif desdits secteurs ;
un module pour affecter au moins une première tonalité de communication à chaque terminal dans chacun desdits secteurs, chaque première tonalité affectée à chacun desdits terminaux se trouvant dans ladite première sous-bande affectée au secteur desdits secteurs dans lequel est situé chaque dit terminal ;
un module pour affecter au moins une deuxième tonalité de communication à chaque terminal dans chacun desdits secteurs, chaque deuxième tonalité affectée à chacun desdits terminaux se trouvant dans ladite première sous-bande affectée au secteur desdits secteurs dans lequel est situé chaque dit terminal après que lesdites premières tonalités affectées sont utilisées en vue de communiquer au moins un symbole ;
un module pour affecter une deuxième sous-bande respective de chacune desdites sous-bandes à chaque secteur respectif desdits secteurs après que lesdites deuxièmes tonalités affectées sont utilisées en vue de communiquer au moins un symbole ; et
un module pour affecter au moins une troisième tonalité de communication à chaque terminal dans chacun desdits secteurs, chaque troisième tonalité affectée à chacun desdits terminaux se trouvant dans ladite deuxième sous-bande affectée au secteur desdits secteurs dans lequel est situé chaque dit terminal.

13. Logiciel selon la revendication 11 ou 12, et adapté de telle sorte qu'au moins une desdites sous-bandes reste non affectée à un quelconque secteur après que chacun desdits modules d'affectation a fonctionné.

14. Dispositif [301] pour affecter des tonalités dans un système sans fil cellulaire à accès multiple à spectre étalé basé sur le multiplexage par répartition en fréquence orthogonal (OFDM), ledit système employant dans une cellule dudit système une pluralité d'antennes directives orientées chacune de manière à diviser ladite cellule en une pluralité de secteurs, chacun desdits secteurs correspondant à une desdites antennes directives, le dispositif étant **CARACTERISE PAR** :
un moyen [307] pour diviser un spectre de fréquences à la disposition dudit système sans fil à accès multiple à spectre étalé basé sur l'OFDM en une pluralité de sous-bandes ;
un moyen [307] pour affecter une première sous-bande respective de chacune desdites sous-bandes à chaque secteur respectif desdits secteurs ;
un moyen [307] pour affecter au moins une première tonalité de communication à chaque terminal dans chacun desdits secteurs, chaque première tonalité affectée à chacun desdits terminaux se trouvant dans ladite première sous-bande affectée au secteur desdits secteurs dans lequel est situé chaque dit terminal ;
un moyen [305] pour utiliser lesdites premières tonalités affectées en vue de communiquer au moins un symbole ;
un moyen [307] pour affecter au moins une deuxième tonalité de communication à chaque terminal dans chacun desdits secteurs, chaque deuxième tonalité affectée à chacun desdits terminaux se trouvant dans ladite première sous-bande affectée au secteur desdits secteurs dans lequel est situé chaque dit terminal ;
un moyen [305] pour utiliser lesdites deuxièmes tonalités affectées en vue de communiquer au moins un symbole ;
un moyen [307] pour affecter une deuxième sous-bande respective de chacune desdites sous-bandes à chaque secteur respectif desdits secteurs ; et
un moyen [307] pour affecter au moins une troisième tonalité de communication à chaque terminal dans chacun desdits secteurs, chaque troisième tonalité affectée à chacun desdits terminaux se trouvant dans ladite deuxième sous-bande affectée au secteur desdits secteurs dans lequel est situé chaque dit terminal.

15. Dispositif selon la revendication 14, dans lequel le fonctionnement dudit dispositif est ordonné de telle sorte que ladite première tonalité soit initialement utilisée pour la communication, qu'ensuite ladite deuxième tonalité soit utilisée pour la communication, et qu'après l'utilisation de ladite deuxième tonalité, ladite troisième tonalité soit utilisée pour la communication.

16. Dispositif selon la revendication 14, comprenant :
un moyen [305] pour utiliser lesdites troisièmes tonalités affectées en vue de communiquer au moins un symbole ; et
un moyen [307] pour affecter au moins une quatrième tonalité de communication à chaque terminal dans chacun desdits secteurs, chaque quatrième tonalité affectée à chacun desdits terminaux se trouvant dans ladite deuxième sous-bande affectée au secteur desdits secteurs dans lequel est situé chaque dit terminal.

17. Dispositif [301] pour affecter des tonalités dans un système sans fil cellulaire à accès multiple à spectre étalé basé sur un multiplexage par répartition en fréquence orthogonal (OFDM), ledit système employant dans une cellule dudit système une pluralité d'antennes directives orientées chacune de manière à diviser ladite cellule en une pluralité de secteurs, chacun desdits secteurs correspondant à une desdites antennes directives, le dispositif étant **CARACTÉRISE PAR** :
un moyen [307] pour diviser le spectre de fréquences à la disposition dudit système sans fil à accès multiple à spectre étalé basé sur l'OFDM en une pluralité de sous-bandes ;
un moyen [307] pour affecter une première sous-bande respective de chacune desdites sous-bandes à chaque secteur respectif desdits secteurs ;
un moyen [307] pour affecter au moins une première tonalité de communication à chaque terminal dans chacun desdits secteurs, chaque première tonalité affectée à chacun desdits terminaux se trouvant dans ladite première sous-bande affectée au secteur desdits secteurs dans lequel est situé chaque dit terminal ;
un moyen [307] pour utiliser lesdites premières tonalités affectées en vue de communiquer une pluralité de symboles ;
un moyen [305] pour affecter une deuxième sous-bande respective de chacune desdites sous-bandes à chaque secteur respectif desdits secteurs ; et
un moyen [307] pour affecter au moins une deuxième tonalité de communication à chaque terminal dans chacun desdits secteurs, chaque deuxième tonalité affectée à chacun desdits terminaux se trouvant dans ladite deuxième sous-bande affectée au secteur desdits secteurs dans lequel est situé chaque dit terminal.

18. Dispositif selon la revendication 17 et adapté de telle sorte qu'au moins une desdites sous-bandes reste non affectée à un quelconque secteur après que chacun desdits moyens d'affectation a fonctionné.

19. Procédé d'exploitation d'un système sans fil cellulaire à accès multiple à spectre étalé basé sur le multiplexage par répartition en fréquence orthogonal (OFDM), employant dans une cellule dudit système une pluralité d'antennes directives orientées chacune de manière à diviser ladite cellule en une pluralité de secteurs, chacun desdits secteurs correspondant à une desdites antennes directives, le procédé étant **CARACTERISE PAR** les étapes d' :
affectation à chacun desdits secteurs d'une sous-bande d'un spectre de fréquences à la disposition dudit système sans fil à accès multiple à spectre étalé basé sur l'OFDM ;
utilisation de tonalités dans lesdites sous-bandes affectées pour la communication avec des terminaux distants dans lesdits secteurs pendant au moins deux périodes de symboles ;
affectation à chacun desdits secteurs d'une nouvelle sous-bande desdites sous-bandes ; et
utilisation de tonalités dans lesdites nouvelles sous-bandes affectées pour la communication avec des terminaux distants dans lesdits secteurs pendant au moins une période de symboles.

20. Dispositif d'exploitation d'un système sans fil cellulaire à accès multiple à spectre étalé basé sur un multiplexage par répartition en fréquence orthogonal (OFDM), employant dans une cellule dudit système une pluralité d'antennes directives orientées chacune de manière à diviser ladite cellule en une pluralité de secteurs, chacun desdits secteurs correspondant à une desdites antennes directives, le dispositif étant **CARACTERISE PAR**:
une unité d'affectation de tonalités [307] pour affecter à chacun desdits secteurs une sous-bande d'un spectre de fréquences à la disposition dudit système sans fil à accès multiple à spectre étalé basé sur l'OFDM et pour spécifier des tonalités particulières dans lesdites sous-bandes affectées pour la communication avec des terminaux dans lesdits secteurs pendant au moins deux périodes de symboles ; et pour affecter en outre à chacun desdits secteurs une nouvelle sous-bande desdites sous-bandes et pour spécifier des tonalités dans lesdites nouvelles sous-bandes affectées pour la communication avec lesdits terminaux dans lesdits secteurs pendant au moins une période de symboles ; et
un moyen d'application de données aux tonalités [305] pour appliquer des données destinées auxdits terminaux avec au moins une desdites tonalités affectées par ladite unité d'affectation de tonalités.

21. Dispositif selon la revendication 20, dans lequel ledit moyen d'application de données aux tonalités est adapté en vue de recevoir comme entrée des données provenant d'un codeur [303].

22. Dispositif selon la revendication 20, dans lequel ledit moyen d'application de données aux tonalités est adapté en vue de fournir lesdites tonalités auxquelles les données ont été appliquées comme entrée d'un moyen d'ajout de préfixe cyclique [309].

23. Dispositif selon la revendication 20, comprenant un extracteur de tonalités en données [405] adapté en vue d'extraire des données à partir de tonalités reçues, lesdites tonalités reçues provenant desdits terminaux, et dans lequel chaque terminal est adapté en vue de transmettre uniquement sur une tonalité qui se trouve dans ladite sous-bande qui est actuellement affectée au secteur dans lequel est situé chaque dit terminal mobile.

24. Procédé destiné à être utilisé dans l'exploitation d'un terminal de système sans fil cellulaire à accès multiple à spectre étalé basé sur un multiplexage par répartition en fréquence orthogonal (OFDM), dans lequel une cellule dudit système emploie une pluralité d'antennes directives orientées chacune de manière à diviser ladite cellule en une pluralité de secteurs, chacun desdits secteurs correspondant à une desdites antennes directives, le procédé étant **CARACTERISE PAR** les étapes de :
transmission d'informations depuis chaque terminal dans un secteur de ladite cellule sur une ou plusieurs tonalités sélectionnées pour se trouver dans une sous-bande d'un spectre de fréquences à la disposition dudit système sans fil à accès multiple à spectre étalé basé sur l'OFDM qui est actuellement affectée audit secteur dans lequel sont situés lesdits terminaux ;
changement de ladite sous-bande qui est affectée audit secteur ; et
répétition de ladite étape de transmission.

25. Procédé destiné à être utilisé dans l'exploitation d'un terminal de système sans fil cellulaire à accès multiple à spectre étalé basé sur un multiplexage par répartition en fréquence orthogonal (OFDM), dans lequel une cellule dudit système emploie une pluralité d'antennes directives orientées chacune de manière à diviser ladite cellule en une pluralité de secteurs, chacun desdits secteurs correspondant à une desdites antennes directives, le procédé étant **CARACTERISE PAR** les étapes de :
réception d'informations depuis chaque terminal dans un secteur de ladite cellule sur une ou plusieurs tonalités sélectionnées pour se trouver dans une sous-bande d'un spectre de fréquences à la disposition dudit système sans fil à accès multiple à spectre étalé basé sur l'OFDM qui est actuellement affectée audit secteur dans lequel sont situés lesdits terminaux ;
changement de ladite sous-bande qui est affectée audit secteur ; et
répétition de ladite étape de réception.
